# EUROPEAN PATENT APPLICATION

(11) **EP 3 848 123 A1**
(43) Date of publication of application: **14.07.2021**
(21) Application number: 19857375.0
(22) Date of filing: 05.09.2019
(51) Int. Cl.: B01L 3/00, F16K 99/00

(54) **ISOLATION SYSTEM BETWEEN MICRO VALVE AND LIQUID, CONTROL METHOD, AND BIOCHIP**

(30) Priority: 06.09.2018 CN 201811037994
(71) Applicant: Hunan Legend Ai Chip Biotechnology Co., Ltd., Changsha, Hunan 410205 (CN)
(72) Inventor: WU, Pengcheng, Changsha Hunan 410205 (CN); XIANG, Sumin, Changsha Hunan 410205 (CN); HUANG, Changqing, Changsha Hunan 410205 (CN)
(74) Representative: Grünecker Patent- und Rechtsanwälte PartG mbB
(86) International application number: PCT/CN2019/104505
(87) International publication number: WO 2020/048506

(57) **Abstract**

An isolation system between a micro valve and liquid, and a control method and a biochip using the isolation system. The isolation system comprises: a reagent chamber (1), a first pipeline (4), a second pipeline (9), and a reaction chamber (8). The reagent chamber (1) is used for storing liquid. The liquid outlet end of the reagent chamber communicates with one end of the first pipeline (4), the other end of the first pipeline (4) is separated from one end of the second pipeline (9) by means of a normally-closed micro valve (6), and the other end of the second pipeline (9) communicates with the reaction chamber (8); and an air column (5) is arranged in the first pipeline (4), one end of the air column (5) is in contact with the normally-closed micro valve (6), the other end of the air column (5) is in contact with the liquid (3), and the first pipeline (4) communicates with the second pipeline (9) when the normally-closed micro valve (6) is opened. The present invention can ensure that the liquid will not flow into the micro valve during the storage process, and the stored liquid is not affected during the change process of the micro valve.

## Description

### Field of the Invention

The present invention relates to an isolation system between a micro valve and liquid, a control method and a biochip, and belongs to the field of biochip detection.

### Background of the Invention

The microfluidic chip technology is to integrate sample preparation, reaction, separation, detection and other basic operation units of biological, chemical and medical analysis processes onto a micro scale chip to automatically complete the whole process of analysis. Because of its great potential in biology, chemistry, medicine and other fields, it has developed into a brand new interdisciplinary research field of biology, chemistry, medicine, fluid, electronics, materials, machinery and so on.

At present, most of the reagents used in microfluidic chips are injected from the outside, and the reagents flow in accordance with pipelines driven by external forces. At present, a detection reagent of the microfluidic chip is added into a reagent chamber of the chip in advance, so that there is no need to inject the reagent externally in use; and the fluidity of the injected reagent is controlled by the change of a micro valve of the microfluidic chip.

The main disadvantage of the prior art is that the detection reagent must be injected from the outside in use, which takes a lot of time and cannot be automated. Therefore, a structure for isolating the micro valve from the liquid is needed to ensure that the liquid will not flow into the micro valve during the storage process, and the micro valve will not affect the stored liquid or the flow smoothness of the liquid during the change process.

The invention patent publication number CN1512095C discloses an ice valve for opening and closing a micro/nano fluid channel, including: a semiconductor refrigerator placed at the lower end of a micro flow channel with flowing fluid, and a radiator located at the refrigerating end or heating end of the semiconductor refrigerator, wherein a heat-conducting insulating layer composed of low thermal resistance and high strength insulating paint is arranged between the semiconductor refrigerator and the radiator; and a micro heater located on the upper end face of the micro channel for heating the micro flow channel; the micro heater is a steam pocket into which steam is introduced, a micro electric heater with a power supply, or a micro laser heater with a laser heating source; the semiconductor refrigerator is composed of a plurality of semiconductor refrigeration modules that are connected in parallel; and the ice valve has no moving component, is convenient to control and is an ideal micro valve structure that can be integrated easily. However, since ice is adopted as a valve core in the patent, the ice valve cannot be used for storing the reagent, and the valve core is not existed in a normal state; and furthermore, ice is prone to react with the reagent, the size of the ice serving as the valve core is too large (the micron scale cannot be achieved), so accurate control cannot be achieved. In addition, if the patent is applied to the microfluidic chip, a circuit needs to be implanted into the chip, which further increases the manufacturing difficulty of the chip and reduces the reliability of the chip.

The invention patent publication number CN103501908A discloses a system for regulating a valve on a sample processing device, the valve controls micro fluid, and an input chamber, a fluid passage (equivalent to the first pipeline of the present application), a distribution channel and a processing chamber are specifically disclosed.

The input chamber is used for storing fluid, such as blood, plasma, serum, urine or other fluid, the liquid outlet end of the input chamber communicates with one end of the fluid passage, the other end of the fluid passage is separated from one end of the distribution channel by a normally-closed diaphragm valve, the other end of the distribution channel communicates with the processing chamber, a capillary valve is arranged between the fluid passage and the diaphragm valve, when the diaphragm valve is in a closed structure, a sample is moved, and a pressure is allowed to be formed in a processing array, this structure of the capillary valve and the diaphragm valve can produce air resistance to prevent the fluid from entering the valve chamber, the valve diaphragm can be opened without the interference of other substances, one end of the capillary valve is in contact with the diaphragm valve, the other end of the capillary valve is in contact with the fluid, and the fluid passage communicates with the distribution channel when the diaphragm valve is opened.

However, CN103501908A can only achieve qualitative sample injection, but cannot achieve quantitative sample injection of the present application, so it cannot meet the sample injection stability standard of less than 3%. In addition, in CN103501908A, the liquid passing through the capillary valve is in a jet flow state and an uncontrollable flow state, therefore quantitative sample injection in a small amount cannot be achieved, and the reagent in the reagent chamber can only be added into the reaction chamber by a centrifugal force as much as possible in theory. The residual instability can not be overcome in this way, so the amount of reagent reaching the reaction chamber is uncontrollable; and moreover, the capillary valve in CN103501908A is always a narrow channel before and after the diaphragm valve is opened, so the formed reagent flow is an uncontrollable flow, resulting in that the residue is also a very unstable residue, accordingly, the quantitative sample injection of the reagent cannot be achieved.

### Summary of the Invention

The present invention aims at providing an isolation system between a micro valve and liquid, a control method and a biochip. By using this isolation system, a reagent for chip detection is injected into a chip reagent chamber in advance to ensure that the liquid will not flow into the micro valve during the storage process, and the stored liquid is not affected during the change process of the micro valve.

In order to achieve the above purpose, the technical solution adopted by the present invention is as follows:
An isolation system between a micro valve and liquid, which is structurally characterized by including a reagent chamber, a first pipeline, a second pipeline and a reaction chamber; the reagent chamber is used for storing the liquid, the liquid outlet end of the reagent chamber communicates with one end of the first pipeline, the other end of the first pipeline is separated from one end of the second pipeline by means of a normally-closed micro valve, and the other end of the second pipeline communicates with the reaction chamber; and an air column, which is air filled between the normally-closed micro valve and the liquid , and the first pipeline communicates with the second pipeline when the normally-closed micro valve is opened.

Due to the existence of the isolation air column in the present invention, the energy generated when the micro valve changes does not affect the form of the liquid after passing through the air column. In addition, the pipeline structure from the reagent chamber to the laser valve is beneficial to the flow of the reagent, so that the flowing smoothness of the liquid is good.

Thus, the normally-closed micro valve of the present invention is normally closed in a normal state, and when it needs to be opened, a valve core is melted or gasified by a heating device (preferably laser heating), so as to ensure that the first pipeline communicates with the second pipeline.

According to the embodiment of the present invention, the present invention can be further optimized, and technical solutions formed after optimization are described below:
A plunger serving as a piston is installed on the top of the reagent chamber. Thus, when the normally-closed micro valve is opened, the liquid can be driven into the reaction chamber by pressing the plunger. Preferably, the distance between the plunger and the liquid level of the liquid stored in the reagent chamber is 0 mm to 3 mm.

In order to minimize the influence on the liquid after the normally-closed micro valve is melted, the length of the air column is longer than 5 mm. After the reagent is injected, at least 5 mm of air column is used for isolating the reagent chamber from the pipeline of the micro valve.

In order to realize accurate quantitative control, the pipe diameters of the first pipeline and the second pipeline are 100 um to 1000 um, and the diameter of the valve core of the normally-closed micro valve is 100 um to 1000 um; and/or the valve core of the normally-closed micro valve has a size (i.e., the thickness of the valve core) of 100 um to1000 um along the length direction of the first pipeline or the second pipeline; preferably, the pipe diameters of the first pipeline and the second pipeline are 300 um to 500 um, and the diameter of the valve core of the normally-closed micro valve is 300 um to 500 um; and/or the valve core of the normally-closed micro valve has a size of 300 um to 500 um along the length direction of the first pipeline or the second pipeline.

Therefore, micro quantitative control can be realized. The diameter of the valve core of the normally-closed micro valve is 1 mm, and the thickness of the normally-closed micro valve is 0.4 mm.

Preferably, the diameter of the valve core of the normally-closed micro valve is consistent with the sectional areas of the first pipeline and the second pipeline.

In order to open the normally-closed micro valve conveniently, the reagent chamber, the first pipeline, the second pipeline and the reaction chamber are all arranged in a chip substrate, at least one surface of the chip substrate is made of light transmitting material, the valve core of the normally-closed micro valve, the pipe wall of the first pipeline and the pipe wall of the second pipeline are made of the same material, and one side of the chip substrate made of the light transmitting material is provided with a laser light source. Preferably, the melting point of the valve core is 40°C to 170°C, and the gasification temperature of the valve core is 80°C to 300°C. In this way, when the normally-closed micro valve needs to be opened, the valve core is irradiated by laser at a fixed point, so that the valve core is melted or gasified, and the first pipeline communicates with the second pipeline. Since the valve core of the normally-closed micro valve, the pipe wall of the first pipeline and the pipe wall of the second pipeline are made of the same material, the processing cost is lower. By melting or gasifying the valve core by means of laser at the fixed point, it can be ensured that the pipe wall of the first pipeline and the pipe wall of the second pipeline will not be melted or gasified while the valve core is melted or gasified.

Preferably, the valve core of the normally-closed micro valve is made of a high-molecular polymer. The high-molecular polymer refers to a high molecular weight (usually up to 10-10⁶) compound formed by repeatedly connecting bonds.

In order to improve the light absorption efficiency, the outer surface of the valve core is provided with a dark coating. Preferably, the dark coating is a black coating, or preferably, the valve core is made of black material. In this way, the time for melting or gasifying the valve core can be shortened.

In order to solve the integration problem of the micro valve and the chip, the valve core and a chip base are of an integrated structure. In this way, the process difficulty and the processing cost can be reduced, and the sealing property is better.

In order to ensure that the molten liquid of the valve core flows into an overflow pool so as not to affect the flow rate of the pipelines and to ensure the smoothness of the pipelines, the overflow pool arranged on the first pipeline is located on the upstream side of the valve core and/or the overflow pool arranged on the second pipeline is located on the downstream side of the valve core. More preferably, the overflow pool is 0.5 mm to 1 mm lower than the inner wall surface of the first pipeline or the second pipeline; and/or the overflow pool has a size of 0.5 mm to 1 mm along the length direction of the first pipeline or the second pipeline. This design of the overflow pool not only ensures that the molten valve core does not affect the flow rate of the pipelines, but also avoids an excessive thickness of the chip substrate.

Based on the same invention concept, the present invention further provides a biochip, including a chip substrate, wherein the chip substrate is provided with a plurality of isolation systems between the micro valve and the liquid, and the reagent chamber, the first pipeline, the second pipeline and the reaction chamber are all arranged in the chip substrate; and the isolation systems between the micro valve and the liquid share a reaction chamber. In this way, according to the reaction needs, the liquid in different reagent chambers can be injected into the reaction chambers according to the requirements.

In this way, since the reagent chamber, the first pipeline, the second pipeline and the reaction chamber are integrated into the chip substrate, the occupied space is greatly saved, the integration degree is improved, and modularization and automatic control are facilitated.

Based on the same invention concept, the present invention further provides a method for controlling liquid by using the isolation system between the micro valve and the liquid, which includes the following steps:
S1. injecting a required amount of liquid into the reagent chamber in advance and then sealing the injection port, wherein when the liquid is injected, the tail end of the liquid is isolated from the normally-closed micro valve through the air column; S2. when the liquid needs to be transported to the reaction chamber, irradiating the valve core of the normally-closed micro valve by the laser light source arranged on the outer side of the normally-closed micro valve, and melting or gasifying the valve core, so that the normally-closed micro valve is opened, the first pipeline communicates with the second pipeline, and the liquid flows into the reaction chamber from the reagent chamber.

One preferred solution is that when the normally-closed micro valve is opened and the liquid flows into the reaction chamber from the reagent chamber, the pipe diameters of the first pipeline and the second pipeline are relatively small and are micron scale, therefore the plunger serving as the piston at the top of the reagent chamber can be pressed under an external force, so as to ensure that the liquid in the reagent chamber can flow into the reaction chamber as soon as possible.

Due to the existence of the air column, the liquid stored in reagent chamber will not flow into the normally-closed micro valve, so that the energy generated when the micro valve changes does not have a great impact on the stored liquid.

Thus, the normally-closed micro valve is separated from an actuating force source in the present invention, so that the overall manufacturing process of the normally-closed micro valve is simplified, the micro valve can be integrated on a microfluidic control system more easily, and the generation cost of the microfluidic control system is greatly reduced.

The micro valve of the present invention creates a new way of opening the micro valve.

The laser is used as an actuating force to open the valve core structure embedded in the microfluidic control system. The main advantages of the micro valve are as follows: the control process of the micro valve is fast in response and high in stability, and industrialized production and practical application can be effectively realized.

The micro valve in the present invention is the key executive component of the microfluidic control system, and the fluid channel of the micro valve is switched from normally closed to normally open under the action of laser.

The laser in the present invention is a kind of artificial light, which can realize directional light emitting, and the light source is stable, the wavelength is single, and the energy is great.

Preferably, the light source of the laser is a bluish violet laser light source. The wavelength range of the laser is preferably 400 nm to 980 nm.

Compared with the prior art, the present invention has the beneficial effects that the detection reagents in the prior art are mainly injected from the outside in use. In the microfluidic chip technology of the present invention, the required reagent is added into the chip reagent chamber in advance for storage and is ready for use. When used, the pipeline is circulated by changing the micro valve, and the reagent is pressed into a reaction tank by the plunger. The isolation system between the micro valve and the liquid in the present invention can separate the reagent that is injected into the chip in advance for storage from the micro valve, thereby not affecting the change of the micro valve, and avoiding the influence of the energy generated when the micro valve changes on the stored liquid, and the pipeline design from the reagent chamber to the micro valve is conducive to the flow of the reagent.

Through the design of the bent pipelines and the pipe diameters, multiple times of researches and verification, and through the design of the bent structure and the pipe diameters in the present application, stable balance of "liquid column-air column larger than 5 mm-micro valve" is formed in the bent pipeline in a plunger sealing environment.

Meanwhile, the air column in the present application is essentially different from the capillary valve in CN103501908A. The air column in the present application disappears after the normally-closed micro valve is opened, the capillary valve exists all the time after the diaphragm valve in CN103501908A is opened, and air resistance is still formed in the middle of the capillary valve even the centrifugal force disappears.

After the micro valve is melted, the released energy has little influence on the stored liquid, the form of the liquid has no change, and the temperature change has been tested to increase by 1.3°C at most, which has no effect on the storage of the liquid. After the micro valve is melted, the pipeline forms a passage, and after the plunger is pressed, the air and the liquid stored in the pipeline flow into a preset position.

Compared with CN103501908A, only one valve, i.e., the normally-closed micro valve, exists in the pipeline of the present application. In other words, after the normally-closed micro valve of the present application is opened, the whole pipeline is unobstructed. Further, in order to realize the unobstructed state, the overflow pool is creatively designed in the present application. On the contrary, in CN103501908A, after the diaphragm valve is opened, the capillary valve exists in the pipeline all the time, which is quite different in structure. At the same time, after the diaphragm valve in CN103501908A is opened, the capillary valve exists in the pipeline all the time, therefore, an enough pressure is required to squeeze the liquid in the input chamber during sample injection, so that the liquid can enter the detection chamber through the capillary valve. However, it is well known to those skilled in the art that the liquid is in a jet state when it is squeezed to pass through the capillary valve. In other words, in the jet state, it is impossible to guarantee that the liquid added into the detection chamber is quantitative.

Therefore, the main difference between the present application and CN103501908A is that the objects are different. According to the valve in the present application, after the valve is opened, the stored liquid needs to be quantitatively added into the reaction chamber, which is quantitative addition in essence. In CN103501908A, it is only necessary to add the liquid into the reaction chamber, it is unnecessary to strictly control the precision, and sample injection cannot be quantitatively controlled, which is qualitative addition in essence.

### Brief Description of the Drawings

Fig. 1 is a schematic diagram of a vertical surface of one embodiment of the present invention;
Fig. 2 is a schematic diagram of a front face part of a chip substrate of the present invention;
Fig. 3 is a schematic diagram of a back surface part of the chip substrate of the present invention;
Fig. 4 is an effect diagram of after liquid is added into a reagent chamber;
Fig. 5 is a local schematic diagram before a normally-closed micro valve is melted;
Fig. 6 is a local schematic diagram during the melting of the normally-closed micro valve;
Fig. 7 is a space diagram of a front section in Fig. 1;
Fig. 8 is a space diagram of a back section in Fig. 1.

### Reference signs

1. reagent chamber; 2. plunger; 3. liquid; 4. first pipeline; 5. air column; 6. normally-closed micro valve; 7-chip substrate; 8-reaction chamber; 9-second pipeline; 10-melted micro valve; 11-laser light source.

### Detailed Description of Embodiments

The present invention will be described in detail below with reference to the drawings and in conjunction with embodiments. It should be noted that the embodiments in the present invention and features in the embodiments may be combined with each other without conflict. For the convenience of description, the words "up," "down," "left" and "right," if appearing in the following description, are merely meant to be consistent with the up, down, left and right directions of the drawings themselves and do not generate a limiting effect on the structure.

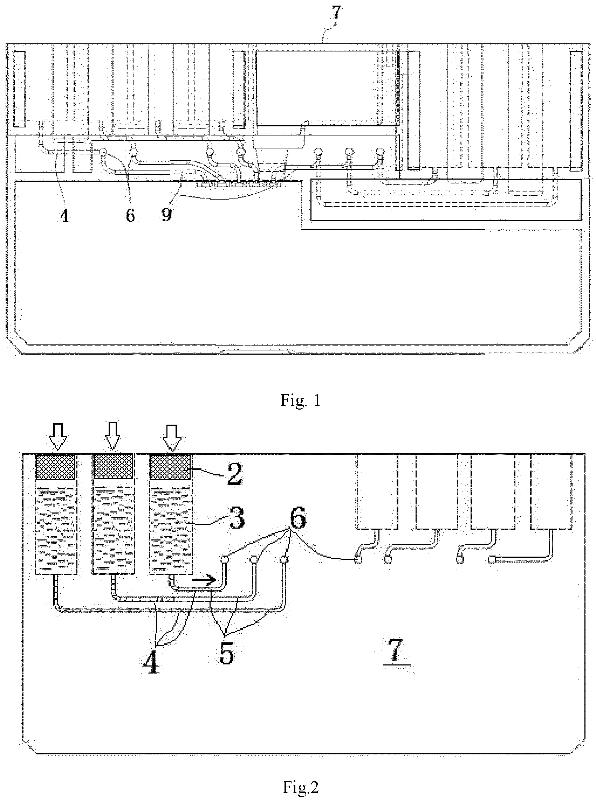

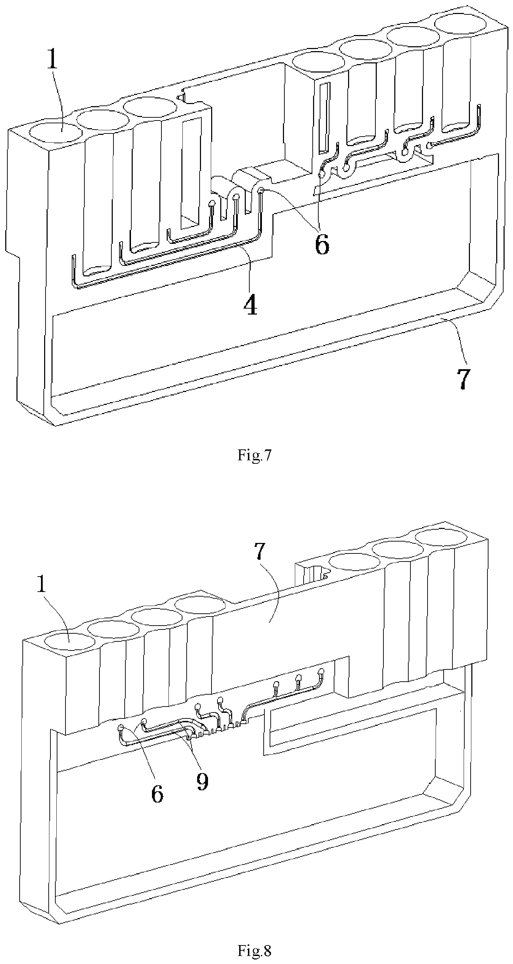

An isolation system between a micro valve and liquid, as shown in Figs. 1-3, 7 and 8, includes a reagent chamber 1, a first pipeline 4, a second pipeline 9 and a reaction chamber 8. The reagent chamber 1, the first pipeline 4, the second pipeline 9 and the reaction chamber 8 are arranged in a chip substrate 7. The reagent chamber 1 is used for storing liquid 3, the bottom end of the reagent chamber 1 communicates with one end of the first pipeline 4, the other end of the first pipeline 4 is separated from one end of the second pipeline 9 by means of a normally-closed micro valve 6, and the other end of the second pipeline 9 communicates with the reaction chamber 8. An air column 5 with a length longer than 5mm is arranged in the first pipeline 4, one end of the air column 5 is in contact with the normally-closed micro valve 6, the other end of the air column 5 is in contact with the liquid 3, and the first pipeline 4 communicates with the second pipeline 9 when the normally-closed micro valve 6 is opened. In the present embodiment, the best way to open the normally-closed micro valve 6 is to heat the valve core of the normally-closed micro valve 6 at a fixed point by using laser, so that the valve core of the normally-closed micro valve 6 is melted, and the first pipeline 4 and the second pipeline 9 form a passage as a result.

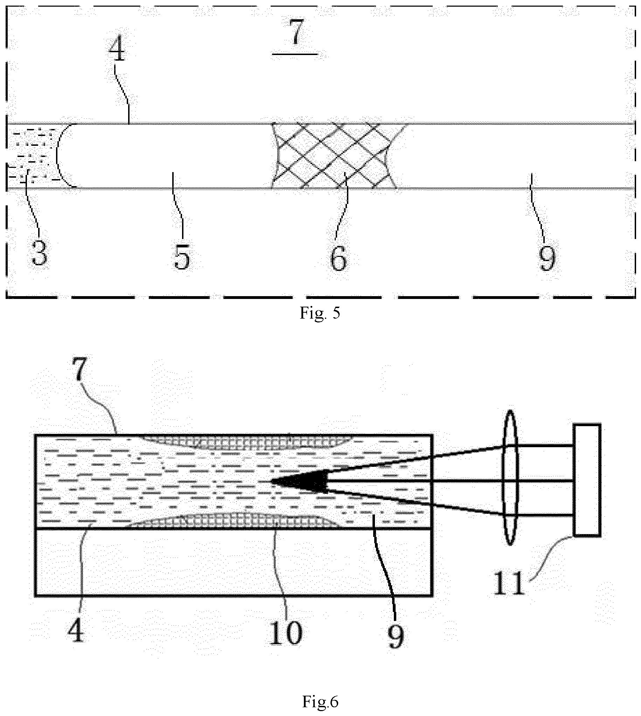

When the upper end of reagent chamber 1 is not sealed by a plunger 2, when the liquid 3 is added, the liquid 3 will not flow into a micro pipeline 4 basically, after the plunger 2 is pressed in advance, the tail end of the liquid flow moves downward to a position as shown in Fig. 2 under the pressure of the plunger 2, and the position of the plunger 2 is determined, the air column 5 reserved between the tail end of the liquid flow and the micro valve plays the role of isolating the micro valve 6 from the liquid 3. In a sealed environment, the air reserved between the tail end of the liquid flow and the micro valve 6 reaches a balance state, under the condition that the plunger is not pressed and the pipeline is blocked, the position of the isolation air column will not change. As shown in Fig. 5, the chip is reversed and shaken, and due to the existence of the air column between the tail end of the liquid flow and the micro valve, the distance between the tail end of the liquid flow and the micro valve remains unchanged.

The plunger 2 serving as a piston is installed on the top of the reagent chamber 1. The pipe diameters of the first pipeline 4 and the second pipeline 9 are 100 um to 1000 um, preferably 300 um to 500 um. The diameter of the valve core of the normally-closed micro valve 6 is 100 um to 1000 um, preferably 300 um to 500 um. The valve core of the normally-closed micro valve 6 has a size of 100 um to 1000 um along the length direction of the first pipeline 4 or the second pipeline 9, preferably 300 um to 500 um.

At least one surface of the chip substrate 7 is made of light transmitting material, the valve core of the normally-closed micro valve 6, the pipe wall of the first pipeline 4 and the pipe wall of the second pipeline 9 are all made of the same material, and one side of the chip substrate 7 made of the light transmitting material is provided with a laser light source 11. An overflow pool arranged on the first pipeline 4 is located on the upstream side of the valve core and/or an overflow pool arranged on the second pipeline 9 is located on the downstream side of the valve core. In this way, when the valve core is melted, it can automatically flow to the overflow pool, thereby avoiding the influence on the pipe diameters of the first pipeline 4 and the second pipeline 9 to affect the flow rate.

The overflow pool is 0.5 mm to 1 mm lower than the inner wall surface of the first pipeline 4 or the second pipeline 9. The overflow pool has a size of 0.5 mm to 1 mm along the length direction of the first pipeline 4 or the second pipeline 9.

When the liquid is added into the reagent chamber, the structure for isolating the micro valve from the liquid in the present invention isolates the micro flow of the liquid from the micro valve through the air column reserved in the pipeline, the isolation air column is generated because the air reserved between the tail end of the liquid flow and the micro valve reaches a balance state in the sealed environment, under the condition that the plunger is not pressed and the pipeline is blocked, the position of the isolation air column does not change to isolate the micro valve from the liquid, therefore the added liquid will not affect the change of the micro valve, and the energy generated by the change of the micro valve will not affect the added liquid.

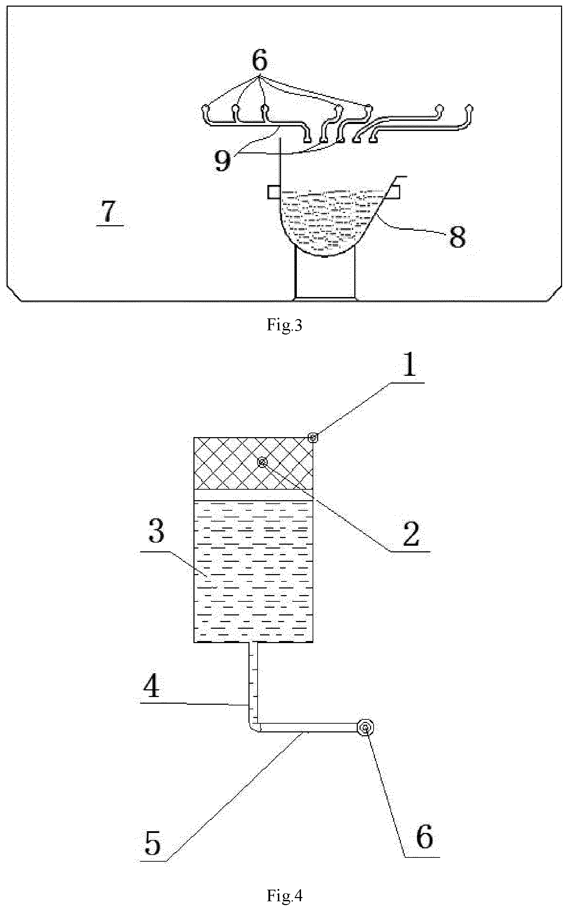

In addition, as shown in Fig. 3, the plunger is installed at the upper end of the reagent chamber, and the gap between the liquid 4 and the plunger 2 is very small, generally 0-3 mm. In this way, when the biochip is reversed and shaken, the activity space in the liquid is very small, and magnetic beads in the liquid are always immersed in the liquid and are not exposed to the air.

A biochip, as shown in Figs. 1-4, 7 and 8, includes a chip substrate 7, the chip substrate 7 is provided with a plurality of isolation systems between the micro valve and the liquid, and the reagent chamber 1, the first pipeline 4, the second pipeline 9 and the reaction chamber 8 are all arranged in the chip substrate 7. The isolation systems between the micro valve and the liquid share a reaction chamber.

A method for controlling liquid by using the isolation system between the micro valve and the liquid, as shown in Fig. 4, includes the following steps:
S1. injecting a required amount of liquid 3 into the reagent chamber 1 in advance and sealing the injection port through the plunger 2, wherein as shown in Fig. 4 and Fig. 5, when the liquid 3 is injected, the tail end of the liquid is isolated from the normally-closed micro valve 6 through the air column 5; and there is a certain bent structure from the reagent chamber to the micro valve, further, the pipeline structure is closed when the micro valve is not damaged, therefore when the liquid is injected, the tail end of the liquid is isolated from the micro valve by a segment of air column, so that the liquid will not flow into the micro valve.
S2. when the liquid needs to be transported to the reaction chamber 8, as shown in Fig. 6, irradiating the valve core of the normally-closed micro valve 6 by the laser light source 11 arranged on the outer side of the normally-closed micro valve 6, and melting or gasifying the valve core, so that the normally-closed micro valve 6 is opened, the first pipeline 4 communicates with the second pipeline 9, and the liquid 4 flows into the reaction chamber 8 from the reagent chamber 1. Therefore, the pipeline becomes circulated through the change of the micro valve, and the energy generated when the micro valve changes will not affect the stored liquid due to the isolation structure between the liquid injected in advance and the micro valve.

In order to ensure that the liquid in the reagent chamber flows into the reaction chamber 8 as soon as possible, the plunger 2 can be pressed as needed, so that the liquid 3 can be pressed from the reagent chamber 1 to the reaction chamber 8 through the first pipeline 4 and the second pipeline 9.

Therefore, in this embodiment, the reagent is injected into the reagent chamber of the chip in advance. When the reagent is injected into the reagent chamber, the reagent chamber is isolated from the pipeline of the micro valve by a segment of air column, so that the liquid will not flow into the micro valve during the storage process, and the energy generated by the micro valve during the change process will not affect the stored liquid, and there is a certain bent structure from the reagent chamber to the pipeline of the micro valve, therefore no adverse affect is generated on the flow smoothness of the liquid.

The valve core of the normally-closed micro valve in the present embodiment separates the first pipeline 4 from the second pipeline 9. The chip substrate 7 is made of black or dark material, and the valve core of the normally-closed micro valve 6, the pipe wall of the first pipeline 4 and the pipe wall of the second pipeline 9 are all made of the same material. The melting point of the valve core is 40°C to 170°C, preferably 100°C to 120°C. The boiling point of the valve core is 80°C to 300°C. The valve core of the normally-closed micro valve 6 is made of a high-molecular polymer. The diameter of the valve core is 1 mm. The inner diameters of the first pipeline 4 and the second pipeline 9 are 0.5 mm. In order to improve the light absorption efficiency, the outer surface of the valve core is provided with a dark coating. The dark coating is preferably a black coating, or the valve core is made of a black material preferably. In this way, the time for melting or gasifying the valve core can be shortened. The laser light source is a bluish violet laser light source. The wavelength range of the laser is 400 nm to 980 nm.

Therefore, the valve core is not melted or gasified in a normal state, and the micro valve is normally closed. When it needs to be opened, the valve core is melted or gasified by a heating device (preferably laser heating), so as to ensure the smoothness of the pipeline.

The starting process of the micro valve is as follows: firstly, causing the laser to penetrate through the chip substrate 7 by using the penetrability of the laser, and aligning the focal length of the laser to the position of the valve core of the micro valve.

Due to the high energy of the laser, after the valve core absorbs the photon energy of the laser, the normally-closed micro valve 6 is rapidly heated and deformed, thereby melted or gasified, and spreads horizontally along the pipe wall (as shown in Fig. 6), the originally blocked pipeline is opened, so that the micro valve is opened. The laser irradiation time is 0.1 s to 10 s.

According to the embodiment of the overflow pool designed by the present invention, when the valve core becomes liquid via phase change, under the action of gravity and surface tension, the valve core which becomes liquid flows to the position of the overflow pool, so as to realize the smoothness of the first pipeline 4 and the second pipeline 9.

The laser light source serving as an actuating force is located at the outside of the chip and does not need to be integrated with the chip, is stable in performance and can be reused repeatedly , which is conducive to the commercial application of the microfluidic chip.

Compared with the ordinary micro valve, the micro valve of the present invention has the advantages of simple structure, simple and convenient processing, no requirement for integration, low cost, easy mass production, and the like.

For the valve core which is not easy to absorb light, dark pigment can be coated on the surface to improve the light absorption efficiency, so as to realize the control function of the micro valve.

In order to realize the function of stable trace and quantitative reagent addition, under the condition that the sectional area of the valve core is consistent with that of the first pipeline and the second pipeline, two problems still need to be overcome. First, an air column greater than 5 mm is required between the micro valve and the liquid to realize the stable opening of the micro valve; and second, the pipeline needs to be unobstructed after melting.

First, in the unused state of the chip, a sealing environment is formed between the plunger and the micro valve, during the pressing process of the plunger, a stable balance state of liquid column-air column greater than 5 mm-micro valve is formed in a bent pipeline between the reagent chamber and the micro valve, in this way, the stable opening of the micro valve can be ensured. This structure is confirmed by multiple times of shaking and reversing experiments, and is simple, stable and reliable.

Second: the size range of the valve core is consistent with that of the first pipeline and the second pipeline. In this way, the size of the valve core can be designed to be consistent with the size of the first pipeline and the second pipeline. At the same time, the overflow pool is arranged on one or both sides of the micro valve, when the micro valve is melted by laser, the molten material is filled into the overflow pool to make the whole pipeline smooth, so that stable flow pipeline is provided for stable and balanced flow.

The present application is a plunger sealing driven micro valve switch structure, the micro valve is vertically arranged, the outlet of the first pipeline, the inlet of the second pipeline and the micro valve are on the same horizontal line, and in conjunction with the consistent size of the first pipeline, the second pipeline and the micro valve, the instability of residual liquid and the backflow risk caused by the large residual amount determined by the structure in CN103501908A are overcome.

**Annexed table 1 sample injection data of comparison examples**

| Test number | Reagent 1 (ul) | Reagent 2 (ul) | Reagent 3 (ul) |
|---|---|---|---|
| 1 | 38.9 | 52 | 51.9 |
| 2 | 40.5 | 54.6 | 50.5 |
| 3 | 48.9 | 50.3 | 50.2 |
| 4 | 49.7 | 51.6 | 54.5 |
| 5 | 50.8 | 51 | 53.2 |
| 6 | 46 | 50.5 | 50 |
| 7 | 47.9 | 58.3 | 50 |
| 8 | 45.2 | 53 | 53.3 |
| 9 | 43.8 | 52.7 | 52.8 |
| 10 | 51.8 | 51.5 | 54.5 |
| Average value | 47.178 | 52.55 | 52.09 |
| CV | 36.34% | 23.91% | 18.16% |

The data in table 1 is because the sizes of the micro valve and the pipeline are inconsistent in the previous design, which is a kind of pipeline with different sectional areas; moreover, neither side of the micro valve is provided with overflow pool, such that the flow state formed in the pipeline is not a controllable uniform flow, and since the overflow pool is not provided, the open states of the micro valve are not uniform, such that the residue generated every time is greatly different, resulting in the instability of sample injection, and the CV (variable coefficient or dispersion coefficient) is very large, which is up to 18.16%, much higher than the stability standard of 3%, in this way, the requirements of accurate quantitative sample injection cannot be met.

**Annexed table 2 sample injection data of the present application**

| Test number | Reagent 1 (ul) | Reagent 2 (ul) | Reagent 3 (ul) |
|---|---|---|---|
| 1 | 33.5 | 35.6 | 33.4 |
| 2 | 32.6 | 35.4 | 33 |
| 3 | 33.8 | 35.3 | 33.4 |
| 4 | 34.6 | 36.1 | 33.2 |
| 5 | 33.8 | 35.1 | 33.1 |
| 6 | 32.5 | 35.3 | 33.8 |
| 7 | 34.1 | 35.2 | 32.7 |
| 8 | 33.8 | 34.1 | 32 |
| 9 | 33.5 | 35.4 | 32.4 |
| 10 | 33.3 | 35.1 | 33.2 |
| 11 | 33.9 | 35.4 | 32.8 |
| 12 | 33.1 | 34.9 | 33.3 |
| Average value | 33.5 | 35.2 | 33 |
| CV | 1.79% | 1.33% | 1.48% |

In Table 2, after a large amount of data testing and analysis in the present application, the pipeline in front of the micro valve, the pipeline behind the micro valve and the valve core are all designed into the same size range, and the overflow pools are arranged on one or both sides of the micro valve, so as to form a smooth and stable flow pipeline after the micro valve is opened. The test shows that the present application realizes trace and quantitative sample injection, and the CV (variable coefficient or dispersion coefficient) is less than 2%, which is less than the sample injection stability standard of 3%, so that the requirements of accurate quantitative sample injection are met.

The normally-closed micro valve of the present invention has the following advantages:
1. The actuating force source of the micro valve is stable, no microfluidic chip resource is occupied, the structure of the valve core is simple, the micro valve and the chip can be integrated easily, the requirements for processing equipment and raw materials are low, the production cost is greatly reduced, and the micro valve is suitable for mass production and commercial use.
2. The opening speed of the micro valve is fast, which is about 2 s, and the valve core can be broken down within 1 s at the soonest to open the micro valve. The laser energy is high, so the material range of the micro valve is expanded and is not limited to low melting point phase change materials. The energy of laser beams is concentrated, and by controlling the focal point and the breakdown time of the laser, only the valve core of the micro valve is broken down without damaging the structures and materials of other parts of the microfluidic system, so that the micro valve has a broad application prospect.
3. The normally-closed micro valve is separated from the actuating force source, so that the whole manufacturing process of the micro valve is simplified, the micro valve can be integrated on the microfluidic system more easily, the production cost of the microfluidic system is greatly reduced, and the micro valve is suitable for the generation and use of the microfluidic system that requires large-scale industrialization. Depending on the contents illustrated in the above embodiments, it should be understood that these embodiments are only used to explain the present invention more clearly and are not intended to limit the scope of the present invention. After reading the present invention, the modifications in various equivalent forms of the present invention by those skilled in the art all fall into the scope defined by the appended claims of the present application.

## Claims

1. An isolation system between a micro valve and liquid, is **characterized by** comprising:
a reagent chamber (1), a first pipeline (4), a second pipeline (9), and a reaction chamber (8);
the reagent chamber (1) is used for storing liquid (3), the liquid outlet end of the reagent chamber (1) communicates with one end of the first pipeline (4), the other end of the first pipeline (4) is separated from one end of the second pipeline (9) by means of a normally-closed micro valve (6), and the other end of the second pipeline (9) communicates with the reaction chamber (8);
an air column (5), which is air filled between the normally- closed micro valve (6) and the liquid (3), the first pipeline (4) communicates with the second pipeline (9) when the normally-closed micro valve (6) is opened; and the length of the air column (5) is longer than 5 mm.

2. The isolation system between the micro valve and the liquid according to claim 1, wherein a plunger (2) serving as a piston is installed on the top of the reagent chamber (1).

3. The isolation system between the micro valve and the liquid according to claim 1, wherein the pipe diameters of the first pipeline (4) and the second pipeline (9) are 100 um to 1000 um, and the diameter of the valve core of the normally-closed micro valve (6) is 100 um to 1000 um; and/or the valve core of the normally-closed micro valve (6) has a size of 100 um to1000 um along the length direction of the first pipeline (4) or the second pipeline (9); and
preferably, the pipe diameters of the first pipeline (4) and the second pipeline (9) are 300 um to 500 um, and the diameter of the valve core of the normally-closed micro valve (6) is 300 um to 500 um; and/or the valve core of the normally-closed micro valve (6) has a size of 300 um to 500 um along the length direction of the first pipeline (4) or the second pipeline (9).

4. The isolation system between the micro valve and the liquid according to claim 3, wherein the diameter of the valve core of the normally-closed micro valve (6) is 1 mm, and the thickness of the normally-closed micro valve (6) is 0.4 mm.

5. The isolation system between the micro valve and the liquid according to any of claims 1 -4, wherein the reagent chamber (1), the first pipeline (4), the second pipeline (9) and the reaction chamber (8) are all arranged in a chip substrate (7), at least one surface of the chip substrate (7) is made of light transmitting material, the valve core of the normally-closed micro valve (6), the pipe wall of the first pipeline (4) and the pipe wall of the second pipeline (9) are made of the same material, and one side of the chip substrate (7) made of the light transmitting material is provided with a laser light source (11).

6. The isolation system between the micro valve and the liquid according to claim 5, wherein the melting point of the valve core is 40°C to 170°C, and the gasification temperature of the valve core is 80°C to 300°C.

7. The isolation system between the micro valve and the liquid according to claim 5, wherein an overflow pool arranged on the first pipeline (4) is located on the upstream side of the valve core and/or an overflow pool arranged on the second pipeline (9) is located on the downstream side of the valve core.

8. The isolation system between the micro valve and the liquid according to claim 7, wherein the overflow pool is 0.5 mm to 1 mm lower than the inner wall surface of the first pipeline (4) or the second pipeline (9); and/or the overflow pool has a size of 0.5 mm to 1 mm along the length direction of the first pipeline (4) or the second pipeline (9).

9. A biochip, comprising a chip substrate (7), wherein the chip substrate (7) is provided with a plurality of isolation systems between the micro valve and the liquid according to any of claims 1-8, and the reagent chamber (1), the first pipeline (4), the second pipeline (9) and the reaction chamber (8) are all arranged in the chip substrate (7); and the isolation systems between the micro valve and the liquid share a reaction chamber (8).

10. A method for controlling liquid by using the isolation system between the micro valve and the liquid according to any of claims 1-8, comprising the following steps:
S1. injecting a required amount of liquid (3) into the reagent chamber (1) in advance and then sealing the injection port, and when the liquid (3) is injected, the tail end of the liquid is isolated from the normally-closed micro valve (6) through the air column (5);
S2. when the liquid needs to be transported to the reaction chamber (8), irradiating the valve core of the normally-closed micro valve (6) by the laser light source (11) arranged on the outer side of the normally-closed micro valve (6), and melting or gasifying the valve core, so that the normally-closed micro valve (6) is opened, the first pipeline (4) communicates with the second pipeline (9), and the liquid (4) flows into the reaction chamber (8) from the reagent chamber (1).
